# EUROPÄISCHE PATENTSCHRIFT

(11) **EP 2 837 957 B1**
(45) Veröffentlichungstag und Bekanntmachung des Hinweises auf die Patenterteilung: **23.11.2016**
(21) Anmeldenummer: 13180202.7
(22) Anmeldetag: 13.08.2013
(51) Int. Cl.: G02B 3/14, G02B 7/02

(54) **Flüssigkeitslinse zur kontrollierten Einstellung einer bestimmten Brennweite**
Fluid lens for the controlled adjustment of a predetermined focal length
Lentille liquide pour ajuster de façon contrôlée une distance focale donnée

(43) Veröffentlichungstag der Anmeldung: 18.02.2015
(73) Patentinhaber: Telesto GmbH, 89081 Ulm (DE)
(72) Erfinder: Depfenhart, Markus, 22417 Hamburg (DE)
(74) Vertreter: Farago, Peter Andreas

(56) Entgegenhaltungen:
- WO-A1-2009/123606
- US-A- 5 074 629
- US-A1- 2007 279 757
- US-A1- 2008 198 473
- THANIN SCHULTHEIS ET AL: "Performance of an adaptive liquid microlens controlled by a microcoil actuator", MICROFLUIDICS AND NANOFLUIDICS, SPRINGER, BERLIN, DE, Bd. 13, Nr. 2, 7. März 2012 (2012-03-07), Seiten 299-308, XP035112936, ISSN: 1613-4990, DOI: 10.1007/S10404-012-0961-3

## Beschreibung

Die vorliegende Erfindung betrifft eine Flüssigkeitslinse mit einer einstellbaren Brennweite, wobei die Flüssigkeitslinse im Wesentlichen einen Träger mit einem Flüssigkeitstropfen und ein Temperaturelement umfasst. Indem durch das Temperaturelement eine bestimmte Temperatur im Flüssigkeitstropfen erzeugt wird, stellt sich eine bestimmte Oberflächenspannung und damit die Brennweite ein. Ein Ferrofluid hält den Flüssigkeitstropfen auf dem Träger.

### Hintergrund der Erfindung und Stand der Technik

Es sind optische Linsen bekannt, kurz Linsen genannt, deren Form sich verändern lässt, wodurch sich naturgemäß die Brennweite verändert. Dabei kann die Linse aus einem gallertartigen Material bestehen, wobei die Linse zwecks Änderung der Brennweite beispielsweise im äußeren Durchmesser verändert wird. Alternativ kann die Linse aus dem Flüssigkeitstropfen bestehen, der entweder alleine oder mit dem Träger oder zusammen mit einer zweiten Flüssigkeit eine linsenartige Wölbung annimmt und dadurch die Brennweite oder allgemeiner eine Linsenfunktion erzeugt. Letztere wird als die Flüssigkeitslinse bezeichnet, die aus einem optischen System besteht, das mindestens den Flüssigkeitstropfen umfasst und das für ein Licht, das gebrochen oder fokussiert oder defokussiert werden soll, optisch möglichst hochtransparent ist. Somit wird vorausgesetzt, dass der Flüssigkeitstropfen, durch den das Licht zumindest auch hindurchtritt und gebrochen wird, ebenfalls möglichst hochtransparent ist. Unter dem Flüssigkeitstropfen versteht man eine kleine Menge der Flüssigkeit, von der zumindest eine Seite eine einstellbare Wölbung besitzt, durch die die Brechung einstellbar ist.

Aus KR 10 2008 0 035 252 A ist eine Flüssigkeitslinse bekannt, die den Flüssigkeitstropfen in einem zylindrischen Behälter hält, wobei die Flüssigkeit mit einer Elektrode galvanisch in Verbindung steht und eine Leitfähigkeit besitzt, so dass durch von außen angelegte elektrische Felder in Bezug auf die Elektrode die Wölbung der Flüssigkeit veränderbar und dadurch die Linsenfunktion steuerbar ist.

Aus der US 2012 0 026 599 A1 ist eine andersartige Flüssigkeitslinse bekannt, die den lichtbrechenden Flüssigkeitstropfen in einem Loch einer Zwischenwand eines zweikammerigen Trägers aufweist, wobei beidseitig eine inkompressible weitere Flüssigkeit, die sich mit dem Flüssigkeitstropfen nicht vermischt, bis zu äußeren Wänden einer jeweiligen ersten und zweiten Kammer mit einem Lichteinlass bzw. einem gegenüberliegenden Lichtauslass aufgefüllt ist. Der Flüssigkeitstropfen in der Mitte bildet gegen die jeweilige weitere Flüssigkeit eine jeweilige Wölbung, so dass dadurch die Linsenfunktion entsteht. Die Zwischenwand besitzt ein zweites Loch zwischen der ersten und der zweiten Kammer, in dem sich ein Tropfen eines Ferrofluids befindet, der durch die inkompressible weitere Flüssigkeit mit dem Flüssigkeitstropfen volumenverschiebungsmäßig gekoppelt ist. Dadurch wird, indem der Ferrofluid Tropfen durch ein von außen angelegtes Magnetfeld in eine Richtung gezogen wird, der Flüssigkeitstropfen in die entgegengesetzte Richtung gezogen, wodurch sich die jeweiligen Wölbungen des Flüssigkeitstropfens ändern und bei unterschiedlichem Brechungsindex der Flüssigkeiten die Brennweite einstellbar ist.

Aus der US 2009 0 046 195 A1 ist eine weitere Flüssigkeitslinse bekannt, die im Wesentlichen aus dem Flüssigkeitstropfen und einer angrenzenden, sich mit dem Flüssigkeitstropfen nicht vermischenden ferrofluidischen Flüssigkeit besteht, wobei die Flüssigkeiten zwischen zwei durchsichtigen Wandungen des Trägers angeordnet sind. Die die Brechung verursachende Wölbung zwischen dem Flüssigkeitstropfen und der ferrofluidischen Flüssigkeit kann durch ein von außen angelegtes Magnetfeld verändert werden. Dass die Flüssigkeiten eine unterschiedliche Brechzahl haben, um eine Linsenfunktion mit einer Brennweite zu erzeugen, versteht sich hier als auch nachstehend als selbstverständlich.

Aus der US 2002 0 196 558 A1 und US 2005 0 088 754 A9 sind weitere Ausführungsformen von Flüssigkeitslinsen bekannt, bei denen der Flüssigkeitstropfen, der eine elektrisch leitfähige Eigenschaft hat und auf einem Träger angeordnet ist, durch von außen angelegte elektrische Felder verschiebbar und deformierbar ist. Dadurch ist die Linsenfunktion nicht nur in der Brennweite sondern auch in der räumlichen Lage veränderlich.

WO 2009 123 606 A zeigt eine veränderbare Flüssigkeitslinse auf, deren Form und damit deren Fokus durch einen veränderbaren Druck unter der Linse verändert wird. Dabei wird der veränderbare Druck durch eine Flüssigkeit in einer umschließenden Kammer erzeugt, deren Volumen beispielsweise durch eine magnetische Platte in Verbindung mit einem Elektromagneten verändert wird.

US 5 074 629 A zeigt eine andere Art veränderbare Flüssigkeitslinse auf, bei der beispielsweise eine Siliziumschicht eine Kavität, die mit einer transparenten Flüssigkeit gefüllt und mit einer transparenten Deckelfläche versehen ist, aufweist, wobei eine Temperaturänderung die Deckelfläche wölbt und den Fokus einstellt. Solche Flüssigkeitslinsen können besonders miniaturisiert hergestellt werden.

US 2007 279 757 A1 offenbart eine Flüssigkeitslinse, die durch eine elektrisch leitfähige und eine elektrisch nicht leitfähige Flüssigkeit, die aneinander grenzen und durch ein elektrisches Feld in der Formveränder werden können, erzeugt wird. Dabei weist die Vorrichtung insbesondere ein Heizelement auf, um die Flüssigkeitslinse auch bei niedrigen Temperaturen und ohne besonderen Einfluss der Umgebungstemperatur einsetzen zu können.

US 2008 0198 473 A1 offenbart eine Flüssigkeitslinse, die durch eine erste und eine zweite Flüssigkeit, die zusammen eine Trennschicht bilden, gebildet wird, von denen die zweite Flüssigkeit ein Ferrofluid ist. Durch ein außen angelegtes Magnetfeld wird die Form des Ferrofluids und dabei insbesondere die Trennschicht zwischen der ersten und der zweiten Flüssigkeit linsenförmig konkav oder konvex, wodurch ein bestimmter Fokus eingestellt wird. Um bei einer starken Fokusveränderung eine optische Verzerrung in einem Randbereich der Trennschicht zur Gehäusewand hin zu reduzieren oder gar zu vermeiden, wird die Gehäusewand entsprechend der Offenbarung ausgebildet.

Eine Schwierigkeit, die sich für viele der Ausführungsformen einer Flüssigkeitslinse und in einer praktischen Langzeitanwendung ergibt, ist eine Verdunstung des Flüssigkeitstropfens und ein sicheres Halten auf dem Träger. Auch ist eine bestimmte Deformierung des Flüssigkeitstropfens hinsichtlich einer gewünschten Linsenfunktion durch eine elektrostatische Anziehung oder Abstoßung unter bestimmten Umständen problematisch, da die Anziehung oder Abstoßung nichtlinear mit dem Verschiebeweg ist. Auch ist für eine elektrostatische Anziehung des Flüssigkeitstropfens in eine Richtung oft eine hohe Spannung nötig, die in kleinen Elektroniken problematisch ist oder sich hinsichtlich Energieeffizienz nachteilig auswirkt. Indem der Flüssigkeitstropfen leitfähig sein muss, sind auch nicht alle Flüssigkeiten dafür geeignet, die aber hinsichtlich Lichttransparenz und Brechungsindex günstig wären.

### Zusammenfassung der Erfindung

Aufgabe der Erfindung ist es daher, die Nachteile des Standes der Technik zu vermeiden und eine Flüssigkeitslinse bereitzustellen, bei der eine Brennweite variabel einstellbar ist, die mit einem die Brennweite mitbestimmenden nicht leitfähigen Flüssigkeitstropfen auskommt, wobei der Flüssigkeitstropfen in allen Raumlagen sicher auf einem Träger gehalten wird.

Die vorstehende Aufgabe sowie weitere, der Beschreibung zu entnehmende Aufgaben werden durch eine Flüssigkeitslinse und durch ein Verfahren zur Erzeugung der Flüssigkeitslise gemäß den Merkmalskombinationen des unabhängigen Anspruchs 1 bzw. 12 gelöst. Weitere vorteilhafte Ausführungsformen der Erfindung sind in den abhängigen Ansprüchen angegeben.

Gemäß Anspruch 1 wird erfindungsgemäß eine Flüssigkeitslinse bereitgestellt, mit der eine kontrollierte Einstellung einer variablen Brennweite für ein durch die Flüssigkeitslise hindurch geleitetes Licht vornehmbar ist, wobei die Flüssigkeitslinse folgendes umfasst:
a) einen Träger, der einen Lichtdurchlassbereich für das Licht aufweist;
b) einen Flüssigkeitstropfen, der für das Licht hochtransparent ist und der auf dem Träger über dem Lichtdurchlassbereich als Teil einer Linsenfunktion angeordnet ist;
c) ein Ferrofluid, das über dem Flüssigkeitstropfen so angeordnet ist, dass es den Flüssigkeitstropfen zumindest an den Flächen umgibt und daran anliegt, die nicht direkt mit dem Träger in Verbindung stehen und anliegen;
d) ein Magnetmittel, das an dem Träger und um den Lichtdurchlassbereich herum so angeordnet ist, dass es das Ferrofluid in allen möglichen Raumlagen der Flüssigkeitslise in einem bestimmten ersten Positionsbereich auf dem Träger hält, wodurch der Flüssigkeitstropfen in einem zweiten Positionsbereich auf dem Träger gehalten wird; und
e) ein Temperaturelement, das so angeordnet ist, um mit dem Flüssigkeitstropfen in thermischer Verbindung zu stehen, um den Flüssigkeitstropfen auf eine bestimmte Temperatur zu bringen
und um durch die bestimmte Temperatur die Oberflächenspannung des Flüssigkeitstropfens entsprechend so zu verändern, um dadurch die Einstellung der Brennweite vorzunehmen.

Dabei kann der Flüssigkeitstropfen vorteilhafterweise aus einer beliebigen Flüssigkeit bestehen, solange die Flüssigkeit für das Licht transparent genug ist. Die Flüssigkeit braucht also keine leitfähigen Eigenschaften mehr aufzuweisen, um beispielsweise durch Elektroden und elektrische Felder in der Form oder Lage verändert werden zu können. Es wird dabei der physikalische Effekt ausgenutzt, dass eine Wölbung der Oberfläche des Flüssigkeitstropfens auf dem Träger durch die Temperatur des Flüssigkeitstropfens bestimmt ist, wodurch sich durch eine Veränderung der Temperatur die Brennweite der Flüssigkeitslinse einstellen lässt. Hierbei sind keine elektrischen Felder notwendig und es lässt sich die Temperatureinstellung durch das Temperaturelement in einfacher Weise durchführen. Insbesondere indem das Temperaturelement bevorzugt als Peltier-Element am Flüssigkeitstropfen ausgeführt ist, lässt sich die Temperatur einfach und kostengünstig am Flüssigkeitstropfen steuern oder regeln.

Die Schwierigkeit den Flüssigkeitstropfen sicher auf dem Träger zu halten, beispielsweise während eines Transports, ist durch das Ferrofluid, das den Flüssigkeitstropfen auf dem Träger allseitig umgibt, gelöst. Auch bei einer Drehung der Flüssigkeitslinse im Raum gegen die Erdanziehung oder bei Beschleunigungen bleibt der Flüssigkeitstropfen sicher auf dem Träger gehalten. Auch ist eine Verdunstungsproblematik bei dem Flüssigkeitstropfen gelöst, da das Ferrofluid den Flüssigkeitstropfen allseitig vor Verdunstung isoliert oder abschließt.

Indem als Magnetmittel vorzugsweise zumindest ein Permanentmagnet verwendet wird, kann auch während eines Transports das Ferrofluid und damit der Flüssigkeitstropfen ohne zusätzliche Energie auf dem Träger gehalten werden.

Vorzugsweise wird das Magnetmittel nach dem Transport und in Betrieb der Flüssigkeitslinse an der Flüssigkeitslinse verlagert, so dass dadurch weniger starke magnetische Kräfte am Ferrofluid auftreten und somit das Ferrofluid und damit der Flüssigkeitstropfen weniger stark in der Form durch die magnetischen Kräfte verändert wird. Vorzugsweise sind in der Flüssigkeitslinse weitere Magnetspulen integriert oder daran angebracht, um die Form des Flüssigkeitstropfens und damit die Linsenfunktion durch das darüber liegende Ferrofluid gesteuert zu verändern. Vorzugsweise sind die Magnetspulen so angeordnet, dass sie das Ferrofluid und damit den Flüssigkeitstropfen in der Höhe über dem Träger und/oder zu den Seiten des Trägers hin verändern können. Generell ist mit einer Veränderung des Flüssigkeitstropfens in der Höhe gemeint, dass dadurch die Wölbung in z-Richtung und damit die Brennweite der Flüssigkeitslinse verändert wird. Mit einer seitlichen Verschiebung ist generell gemeint, dass der Brennpunkt in einer Richtung orthogonal zur z-Richtung und damit in einer x-/y-Ebene veränderbar ist.

Vorzugsweise werden auch zusätzliche elektrische Felder erzeugt, die auf den Flüssigkeitstropfen, der mit einer Elektrode in Verbindung steht, wirken, um dadurch zusätzlich die Linsenfunktion zu verändern oder einzustellen. Auch dabei kann der Brennpunkt zusätzlich in x-, y- und/oder in z-Richtung verändert werden.

Indem bevorzugt eine Zwischenschicht mit einer entsprechenden Zwischenschicht-Flüssigkeit zwischen dem Flüssigkeitstropfen und dem Ferrofluid angeordnet wird oder eingebracht ist, kann sichergestellt werden, dass die Flüssigkeit des Flüssigkeitstropfens nicht mit dem Ferrofluid chemisch reagiert und sich dadurch verändert oder dass sich das Ferrofluid chemisch oder optisch verändert.

Indem in oder an der Flüssigkeitslinse bevorzugt eine Aktuator gesteuerte zusätzliche Linseneinheit angeordnet ist, kann durch die Flüssigkeitslinse einerseits eine mittlere Basisbrennweite eingestellt werden, wobei sich durch die Aktuator gesteuerte zusätzliche Linseneinheit schnelle Änderungen in der Brennweite oder der Linsenfunktion einstellen lassen.

Weitere vorteilhafte Merkmale und Vorteile der Erfindung sind in den abhängigen Ansprüchen oder in der detaillierten Beschreibung angegeben.

Eine bevorzugte Ausführungsform gemäß der vorliegenden Erfindung ist in nachfolgenden Zeichnungen und in einer detaillierten Beschreibung dargestellt, soll aber die vorliegende Erfindung nicht darauf begrenzen.

### Kurzbeschreibung der Zeichnungen

Fig. 1 stellt eine Seitenansicht einer bevorzugten Ausführungsform einer Flüssigkeitslinse dar, wobei die Flüssigkeitslinse einen Träger mit einem darunter angeordneten Temperaturelement, einen Flüssigkeitstropfen, der auf dem Träger angeordnet ist und ein über dem Flüssigkeitstropfen anliegendes Ferrofluid umfasst, das durch ein Magnetmittel, das unter dem Träger angeordnet ist, gegen den Träger gezogen wird.
Fig. 2 stellt eine Seitenansicht einer bevorzugten erweiterten Ausführungsform der Flüssigkeitslinse, verglichen mit der Ausführungsform der Fig. 1, dar, bei der zwischen dem Flüssigkeitstropfen und dem Ferrofluid eine Zwischenschicht aus einer Zwischenschicht-Flüssigkeit angeordnet ist, um den Flüssigkeitstropfen vom Ferrofluid chemisch zu trennen. Zudem sind weitere Magnetmittel an der Flüssigkeitslinse angeordnet.
Fig. 3 stellt eine Seitenansicht der bevorzugten Ausführungsform der Flüssigkeitslinse gemäß Fig. 2 dar, wobei zusätzlich weitere Magnetmittel zur seitlichen magnetischen Anziehung des Ferrofluids an der Flüssigkeitslinse angeordnet sind.
Fig. 4 stellt eine Seitenansicht der bevorzugten Ausführungsform der Flüssigkeitslinse gemäß Fig. 3 dar, wobei zusätzlich eine Aktuator gesteuerte zusätzliche Linseneinheit an der Flüssigkeitslinse angeordnet ist.
Fig. 5 zeigt schematisch die Ausführungsform der Flüssigkeitslinse gemäß Fig. 4 von oben mit den weiteren Magnetmitteln zur seitlichen magnetischen Anziehung des Ferrofluids, wobei beispielhaft mögliche ansteuerbare Fokuspunkte in einer x-y-Ebene dargestellt sind.

### Detaillierte Beschreibung einer bevorzugten Ausführungsform

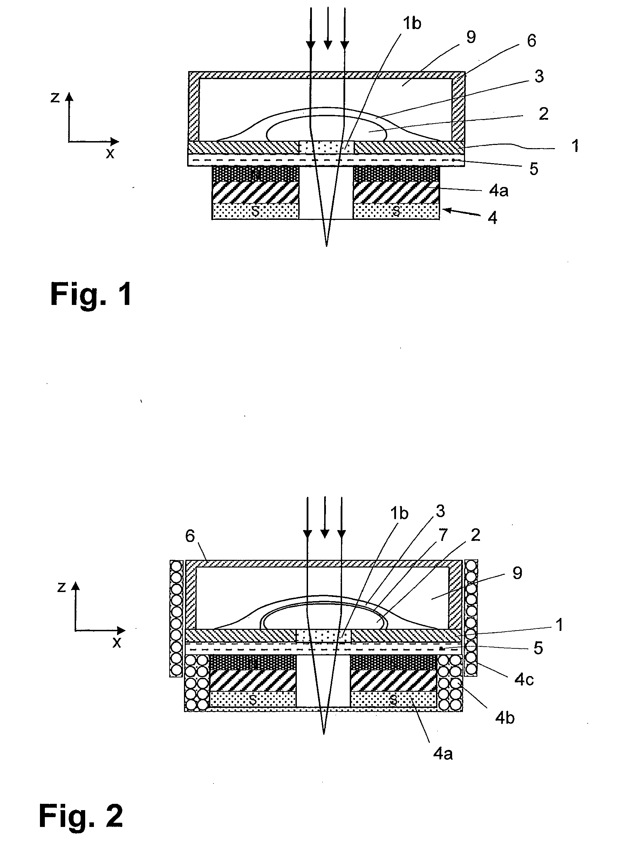

Fig. 1 zeigt eine bevorzugte Ausführungsform einer Flüssigkeitslinse mit einer Linsenfunktion, die eine optische Linsenfunktion ist, für ein hindurch geleitetes Licht, wobei zumindest eine Brennweite als Teil der Linsenfunktion der Flüssigkeitslinse variabel einstellbar ist.

Die Flüssigkeitslinse umfasst einen Träger 1, der bevorzugt in einer Mitte einen Lichtdurchlassbereich 1 b aufweist. Über dem Lichtdurchlassbereich 1 b und auf dem Träger 1 ist ein Flüssigkeitstropfen 2 angeordnet, der durch seine Oberflächenspannung eine Wölbung besitzt und deshalb eine Linsenfunktion aufweist. Der Flüssigkeitstropfen 2 besteht aus einer Flüssigkeit, die für das hindurch geleitete Licht möglichst hochtransparent ist. Dabei ist es auch vorstellbar, dass die Flüssigkeit so gewählt wird, das ein Teil des Lichts mit einem zu dämpfenden Wellenlängenbereich besonders gut absorbiert wird. Die Wölbung der Oberfläche des Flüssigkeitstropfens 2 bildet zusammen mit dem Träger 1 und anderen optischen Komponenten, die vom Licht durchstrahlt werden, die Linsenfunktion. Die Wölbung der Oberfläche des Flüssigkeitstropfens 2, oder abgekürzt des Flüssigkeitstropfens 2, wird bestimmt durch die Oberflächenspannung des Flüssigkeitstropfens 2, die eine Funktion der Temperatur des Flüssigkeitstropfens 2 ist. Indem also die Temperatur des Flüssigkeitstropfens 2 gesteuert oder geregelt wird, verändert sich dementsprechend die Wölbung des Flüssigkeitstropfens 2 und damit dementsprechend die Brennweite der Flüssigkeitslinse.

Deshalb ist bevorzugt unter dem Träger 1 ein Temperaturelement 5 thermisch möglichst gut leitfähig mit dem Träger 1 verbunden, um so den Flüssigkeitstropfen 2 möglichst schnell und direkt aufheizen oder abkühlen und auf eine bestimmte Temperatur bringen zu können. Alternativ kann der Flüssigkeitstropfen 2 auch direkt auf dem Temperaturelement 5 aufliegen, wenn das Temperaturelement 5 im Lichtdurchlassbereich 1 b hochtransparent ist. Beispielsweise kann das Temperaturelement 5 im Lichtdurchlassbereich 1 b einen Durchbruch ein eingesetztes Glasstück besitzen. Bevorzugt ist das Temperaturelement 5 ein Peltier-Element, das Wärme gerätetechnisch sowohl einfach vom Träger 1 oder Flüssigkeitstropfen 2 abtransportieren als auch am Träger 1 oder Flüssigkeitstropfen 2 erzeugen kann. Bevorzugt umfasst die Flüssigkeitslinse auch einen Temperatursensor und eine Regelelektronik, um die bestimmte Temperatur im Flüssigkeitstropfen 2 zu erzeugen.

Über dem Flüssigkeitstropfen 2 ist ein Ferrofluid 3 so angeordnet, dass es den Flüssigkeitstropfen 2 zumindest an den Flächen des Flüssigkeitstropfens 2 umgibt und bevorzugt daran anliegt, die nicht direkt mit dem Träger 1 in Verbindung stehen. In anderen Worten ist der Flüssigkeitstropfen 2 auf dem Träger 1 vom Ferrofluid 3 hermetisch gekapselt, wobei ein Teil des Flüssigkeitstropfen 2 mit dem Träger in Verbindung steht und ein restlicher Teil des Flüssigkeitstropfens 2 mit dem Ferrofluid 3 in Verbindung steht. Dadurch wird einerseits eine Verdunstung des Flüssigkeitstropfens 2 verhindert. Andererseits, indem das Ferrofluid 3 durch ein Magnetfeld im Wesentlichen in einer Position oder in einem ersten Positionsbereich auf dem Träger 1 gehalten wird, wird der Flüssigkeitstropfen 2 zwangsläufig auch in seiner Position oder in einem zweiten Positionsbereich auf dem Träger 1 gehalten. Dadurch kann also eine übermäßige Verschiebung des Flüssigkeitstropfens 2 auf dem Träger 1 verhindert werden, und es kann in Betrieb der Flüssigkeitslinse sichergestellt werden, dass der Flüssigkeitstropfen 2 an einer bestimmten Stelle auf dem Träger 1 und im Lichtdurchlass 1 b positioniert ist. Dadurch kann die Brennweite und eine Position eines Fokus- oder Brennpunkts sichergestellt werden.

Das Magnetfeld zum Halten des Ferrofluids 3 auf dem Träger 1 wird dabei durch ein Magnetmittel 4 erzeugt. Das Magnetmittel 4 ist an dem Träger 1 und um den Lichtdurchlassbereich 1 b herum so angeordnet, dass es das Ferrofluid 3 in allen möglichen Raumlagen der Flüssigkeitslinse auf dem Träger 1 in dem ersten Positionsbereich hält. Bevorzugt ist das Magnetmittel 4 so ausgelegt, dass das Magnetfeld des Magnetmittels 4 das Ferrofluid 3 auch bis zu bestimmten Beschleunigungen auf dem Träger 1 in dem ersten Positionsbereich hält. Indem das Ferrofluid 3 in dem ersten Positionsbereich gehalten wird, wird durch das Ferrofluid 3 der Flüssigkeitstropfen 2 im zweiten Positionsbereich auf dem Träger 1 gehalten.

Bevorzugt ist das Magnetmittel 4 als ein Permanentmagnet 4a ausgelegt. Bevorzugt ist das Magnetmittel 4 unter dem Träger 1 angeordnet, um dadurch das Ferrofluid 3, das unter Einschluss des Flüssigkeitstropfen 2 auf dem Träger 1 aufliegt, gegen den Träger 1 zu ziehen und somit zu verhindern, dass sich das Ferrofluid 3 vom Träger 1 wegbewegen kann. Alternativ oder zusätzlich kann das Magnetmittel 4 mindestens eine elektrische Magnetspule umfassen, mit der das Magnetfeld oder weitere überlagerte Magnetfelder erzeugt werden können. Indem Magnetspulen bevorzugt auch seitlich angeordnet werden, kann die Linsenfunktion auch so eingestellt werden, dass der Fokus- oder Brennpunkt nicht nur in der z-Richtung sondern auch in einer orthogonalen x/y-Ebene dazu verändert bzw. eingestellt werden kann.

Bevorzugt umfasst die Flüssigkeitslinse weitere vor- oder nachgeschaltete Linsen, um die Linsenfunktion, die die Brennweite und/oder die Verschiebung des Fokus- oder Brennpunkts in der orthogonalen x/y-Ebene umfasst, entsprechend zu erzeugen. Dabei besitzt die Linsenfunktion beispielsweise eine Basisbrennweite und eine zusätzliche einstellbare, variable Brennweite, die durch die Temperatur einstellbar ist.

Bevorzugt ist der Träger 1 im Lichtdurchlassbereich 1 b linsenartig konkav oder konvex ausgebildet ist, um dadurch eine Brechkraft zu erzeugen.

Bevorzugt ist der Träger 1 in Form einer Platte, einer Wanne oder einer Schale ausgebildet.

Bevorzugt ist der Träger 1 zumindest teilweise aus einem Glas oder einem Glasverbundmaterial.

Bevorzugt weist die Flüssigkeitslinse über dem Träger 1 noch eine Abdeckung 6 auf, die den Flüssigkeitstropfen 2 und das Ferrofluid 3 zudem weiter beispielsweise vor Verunreinigungen schützt. Dabei kann der Träger 1 die Abdeckung 6 auch integral enthalten, beispielsweise in Form eines flachliegenden Vierkantrohrs, das nach einem Einfüllen des Flüssigkeitstropfen 2 und des Ferrofluids 3 seitlich verschlossen wird.

Bevorzugt ist ein Kammervolumen einer Kammer 9 der Flüssigkeitslinse zwischen dem Träger 1 und der Abdeckung 6, in dem sich der Flüssigkeitstropfen 2 und das Ferrofluid befinden, voll mit Flüssigkeit ausgefüllt. Dadurch kann durch ein relativ kleines Magnetfeld das Ferrofluid 3 in dem ersten Positionsbereich gehalten werden, ohne dass Erd- oder sonstige Beschleunigungskräfte, das Ferrofluid 3 direkt aus seiner Position bringen könnten. Bevorzugt ist dabei das Kammervolumen im Wesentlichen von dem Flüssigkeitstropfen 2 und dem Ferrofluid 3 gefüllt. Es ist auch denkbar, dass eine weitere Flüssigkeit in die Kammer 9 zum Auffüllen eingefüllt ist. Die Flüssigkeiten in der Kammer 9 der Flüssigkeitslinse sind so gewählt, dass sie sich nicht vermischen können.

Bevorzugt besteht der Flüssigkeitstropfen 2 entweder aus Wasser, einem Alkohol, Glycerin oder aus einem Gemisch mit mindestens einem Teil davon.

Fig. 2 stellt eine weitere Ausgestaltung der Flüssigkeitslinse gemäß Fig. 1 dar. Dabei ist dargestellt, dass bevorzugt generell zwischen dem Flüssigkeitstropfen 2 und dem Ferrofluid 3 eine Zwischenschicht-Flüssigkeit 7 angeordnet und eingebracht sein kann. Das Ferrofluid 3 ist dadurch von dem Flüssigkeitstropfen 2 nur durch eine dünne Zwischenschicht der Zwischenschicht-Flüssigkeit 7 beabstandet. Der Zwischenschicht-Flüssigkeit 7 kommt dabei bevorzugt eine Funktion einer chemischen Trennung zwischen dem Ferrofluid 3 und dem Flüssigkeitstropfen 2 zu, um sich weniger zu vermischen und/oder um eine chemische Reaktion des Flüssigkeitstropfen 2 und/oder des Ferrofluids 3 zu vermeiden. Bevorzugt besteht die Zwischenschicht-Flüssigkeit 7 aus einem Öl. Alternativ liegt das Ferrofluid 3 direkt an dem Flüssigkeitstropfen 2 an.

Auch ist in Fig. 2 dargestellt, dass das Magnetmittel 4 einer anderen bevorzugten Ausführungsform zumindest eine Magnetspule 4b, 4c, 4d umfasst, mit der das Ferrofluid 3 auf dem Träger 1 stromgesteuert in mindestens eine Richtung magnetisch ziehbar ist. Alternativ oder zusammen mit einem Permanentmagneten 4a erzeugt eine erste Magnetspule 4b unter Strom ebenfalls das Magnetfeld mit dem das Ferrofluid 3 gegen den Träger 1 gezogen wird. Eine zweite Magnetspule 4c kann unter Strom ein zusätzliches Magnetfeld überlagern.

Auch ist dabei vorstellbar, durch mindestens eine Magnetspule ein durch einen Permanentmagneten 4a verursachtes Magnetfeld teilweise zu kompensieren, um einerseits während eines Transports eine Magnetkraft zur Lagestabilisierung des Ferrofluids 3 vorzuhalten und andererseits nach dem Transport und in Betrieb der Flüssigkeitslinse das Magnetfeld des Permanentmagneten 4a kompensieren und damit quasi ausschalten zu können, um die Form des Flüssigkeitstropfens 2 durch das Ferrofluid 3 in Betrieb möglichst wenig zu beeinflussen.

Bevorzugt umfasst das Magnetmittel 4 den Permanentmagneten 4a, der in der Flüssigkeitslinse fest angeordnet ist.

Alternativ umfasst das Magnetmittel 4 den Permanentmagneten 4a, der in der Flüssigkeitslinse mechanisch verschiebbar und dabei steuerbar angeordnet ist.

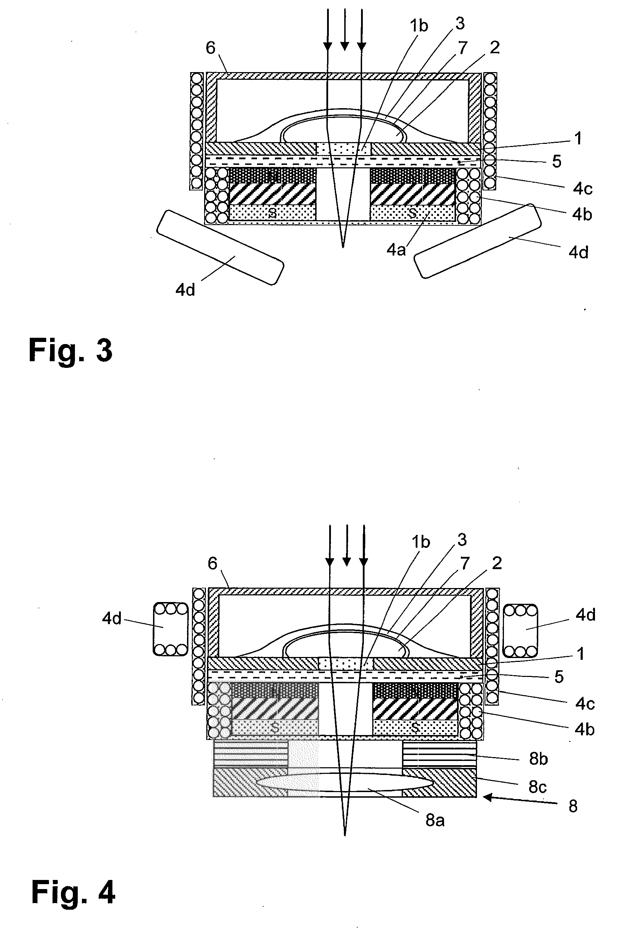

Fig. 3 stellt schematisch eine Ausführungsform der Flüssigkeitslinse dar, die im Vergleich zu derjenigen aus Fig. 2 zusätzlich dritte Magnetspulen 4d aufweist. Durch die bevorzugte seitliche Anordnung der dritten Magnetspulen 4d unter Strom wird das Ferrofluid auch in einer x/y-Ebene orthogonal zum Lichtstrahl und der z-Richtung verschoben oder in der Form verändert, wodurch die Linsenfunktion des Flüssigkeitstropfen 2 und der Fokus- oder Brennpunkt des Lichts orthogonal zur Lichteinfallsrichtung verschiebbar ist.

Fig. 4 stellt schematisch eine Ausführungsform der Flüssigkeitslinse dar, die im Vergleich zu derjenigen aus Fig. 3 eine Aktuator gesteuerte zusätzliche Linseneinheit 8 umfasst. Die Aktuator gesteuerte zusätzliche Linseneinheit 8 kann allen hierin beschriebenen Ausführungsformen vor- oder nachgeschaltet sein und stellt eine wichtige Ergänzung der Flüssigkeitslinse dar. In der skizzierten bevorzugten Ausführungsform umfasst die Aktuator gesteuerte zusätzliche Linseneinheit 8 eine zusätzliche Linse 8a, die in einem Halteelement 8c eingespannt ist, wobei das Halteelement 8c über einen Aktuator 8b mit einer der vorbeschriebenen Ausführungsformen der Flüssigkeitslinse verbunden ist. Der Aktuator 8b kann dabei beispielsweise ein Piezo-Aktuator oder ein anderer Hub-Aktuator oder ein motorbetriebener Aktuator sein, mit dem die zusätzliche Linse 8a im Lichtstrahl, der auch durch die Flüssigkeitslinse geht, verschoben werden kann, um die Brennweite der gesamten Flüssigkeitslinse zu verändern und einzustellen.

Insbesondere lassen durch die Aktuator gesteuerte zusätzliche Linseneinheit 8 schnellere Änderungen der Brennweite erzeugen, als dies über die Temperatur des Flüssigkeitstropfens möglich ist. Dabei wird bevorzugt über die Temperatur des Flüssigkeitstropfens 2 eine Basis-Brennweite oder Basis-Linsenfunktion erzeugt, wobei durch die Aktuator gesteuerte zusätzliche Linseneinheit 8 dann die gewünschte tatsächliche Brennweite, die in einem bestimmten Bereich von der Basis-Brennweite abweichen kann, eingestellt wird.

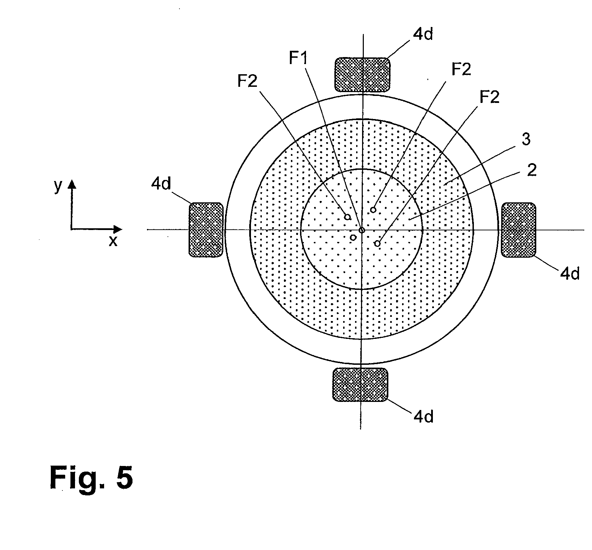

Fig. 5 stellt schematisch in Draufsicht eine Flüssigkeitslinse mit dritten Magnetspulen 4d, die seitlich angeordnet sind, dar, wobei verschiedene Fokus- oder Brennunkte F1, F2 in der x/y-Ebene als Beispiele dargestellt sind, um deutlich zu machen, dass der Fokus- oder Brennunkt bevorzugt sowohl zentrisch als auch nicht-zentrisch eingestellt werden kann.

In einer Ausführungsform, die nicht dargestellt ist, ist das Magnetmittel 4 im Fall, dass die Kammer 9 voll ausgefüllt ist, über dem Ferrofluid 3 angeordnet, um das Ferrofluid 3 einfach in seinem ersten Positionsbereich zu halten. Nach einem Transport und in Betrieb der Flüssigkeitslinse wird das Magnetmittel 4 weiter vom Ferrofluid 3 entfernt oder das Magnetfeld reduziert, um weniger Kraft auf das Ferrofluid 3 auszuüben. Indem weniger magnetische Kraft auf das Ferrofluid 3 ausgeübt wird, wird die Wölbung durch die Oberflächenspannung am Flüssigkeitstropfen 2 weniger gestört.

Bevorzugt ist eine Menge der Flüssigkeit des Flüssigkeitstropfens 2 unerheblich. Eine kleine Menge ist jedoch bevorzugt, da dabei eine schnellere Temperaturänderung vorgenommen werden kann als es bei größeren Mengen der Fall ist.

Bevorzugt ist auch eine Ferrofluid-Menge des Ferrofluids 3 unerheblich.

Eine Erzeugung der einstellbaren, variablen Brennweite für das Licht durch die Flüssigkeitslise umfasst bevorzugt folgende Schritte:
a) Anordnen des Flüssigkeitstropfens 2 auf dem Träger 1 der Flüssigkeitslise, so dass der Flüssigkeitstropfen 2 von dem Licht durchstrahlt wird;
b) Anordnen des Temperaturelements 5 in der Weise, um mit dem Flüssigkeitstropfen 2 in thermisch leitfähiger Verbindung zu stehen;
c) Steuern der bestimmten Temperatur des Flüssigkeitstropfens 2, um dadurch die Oberflächenspannung und durch die Oberflächenspannung die linsenartige Wölbung des Flüssigkeitstropfens 2 zu steuern, wodurch die Brennweite der Flüssigkeitslise mitbestimmt wird;
d) Anordnen des Ferrofluids 3 über dem Flüssigkeitstropfen 2 auf dem Träger 1, so dass sie den Flüssigkeitstropfen 2 zumindest an den Flächen umgibt und daran anliegt, die nicht direkt mit dem Träger 1 in Verbindung stehen; und
e) Anordnen eines Magnetmittels 4 am Träger 1, um das Ferrofluid 3 in allen möglichen Raumlagen der Flüssigkeitslinse in dem ersten Positionsbereich auf dem Träger 1 zu halten, wodurch der Flüssigkeitstropfen 2 auf dem Träger 1 in dem zweiten Positionsbereich gehalten wird.

Weitere mögliche Ausbildungsformen oder Verfahrensschritte sind in den folgenden Ansprüchen beschrieben. Insbesondere können auch die verschiedenen Merkmale der oben beschriebenen Ausführungsformen miteinander kombiniert werden, soweit sie sich nicht technisch ausschließen.

Die In den Ansprüchen genannten Bezugszeichen dienen der besseren Verständlichkeit, beschränken aber die Ansprüche nicht auf die in den Figuren dargestellten Formen.

### Bezugszeichenliste

- 1: Träger
- 1b: Lichtdurchlassbereich
- 2: Flüssigkeitstropfen
- 3: Ferrofluid
- 4: Magnetmittel
- 4a: Permanentmagnet
- 4b: erste Magnetspule
- 4c: zweite Magnetspule
- 4d: dritte Magnetspule
- 5: Temperaturelement
- 6: Abdeckung
- 7: Zwischenschicht
- 8: zusätzliche Linseneinheit
- 8a: zusätzliche Linse
- 8b: Aktuator
- 8c: Halteelement
- 9: Kammer

## Patentansprüche

1. Flüssigkeitslinse zur kontrollierten Einstellung einer variablen Brennweite für ein durch die Flüssigkeitslise hindurch geleitetes Licht, umfassend:
a) einen Träger (1), der einen Lichtdurchlassbereich (1 b) für das Licht aufweist;
b) einen Flüssigkeitstropfen (2), der für das Licht hochtransparent ist und der auf dem Träger (1) über dem Lichtdurchlassbereich (1b) als Teil einer Linsenfunktion angeordnet ist;
c) ein Ferrofluid (3), das über dem Flüssigkeitstropfen (2) so angeordnet ist, dass es den Flüssigkeitstropfen (2) zumindest an den Flächen umgibt und daran anliegt, die nicht direkt mit dem Träger (1) in Verbindung stehen und anliegen;
d) ein Magnetmittel (4), das unter dem Träger (1) und um den Lichtdurchlassbereich (1 b) herum angeordnet ist, um das Ferrofluid (3), das auf dem Träger (1) angeordnet ist, gegen den Träger (1) zu ziehen und in allen möglichen Raumlagen der Flüssigkeitslinse in seiner Lage auf dem Träger (1) zu halten, wodurch der Flüssigkeitstropfen (2) ebenso in seiner Lage auf dem Träger (1) gehalten wird; und
e) ein Temperaturelement (5), das so angeordnet ist, um mit dem Flüssigkeitstropfen in thermischer Verbindung zu stehen, um den Flüssigkeitstropfen auf eine bestimmte Temperatur zu bringen und um durch die bestimmte Temperatur die Oberflächenspannung des Flüssigkeitstropfens entsprechend so zu verändern, um dadurch die Einstellung der Brennweite vorzunehmen.

2. Flüssigkeitslinse nach Anspruch 1, wobei das Temperaturelement (5) ausgebildet ist, den Flüssigkeitstropfen (2) sowohl kontrolliert erwärmen als auch abkühlen zu können; und/oder
wobei das Temperaturelement (5) ein Peltier-Element ist; und/oder wobei das Temperaturelement (5) einen Temperatursensor und eine Regelelektronik umfasst, um die bestimmte Temperatur im Flüssigkeitstropfen (2) zu erzeugen.

3. Flüssigkeitslinse nach Anspruch 1 oder 2, wobei der Träger (1) die Form einer Platte, einer Wanne, einer Schale aufweist; und/oder
wobei der Träger (1) im Lichtdurchlassbereich (1b) linsenartig konkav oder konvex ausgebildet ist, um dadurch eine voreingestellte Brechkraft zu erzeugen; und/oder
wobei der Träger (1) zumindest teilweise aus einem Glas oder einem Glasverbundmaterial besteht.

4. Flüssigkeitslinse nach einem oder mehreren der vorstehenden Ansprüche, wobei der Flüssigkeitstropfen (2) entweder aus Wasser, einem Alkohol, Glycerin oder aus einem Gemisch mit mindestens einem Teil davon besteht.

5. Flüssigkeitslinse nach einem oder mehreren der vorstehenden Ansprüche, wobei das Ferrofluid (3) entweder direkt an dem Flüssigkeitstropfen (2) angrenzt;
oder wobei das Ferrofluid (3) nur durch eine dünne Zwischenschicht-Flüssigkeit (7) von dem Flüssigkeitstropfen (2) beabstandet ist, wobei die Zwischenschicht-Flüssigkeit (7) zur chemischen Trennung zwischen dem Ferrofluid (3) und dem Flüssigkeitstropfen (2) dient und sich mit dem Flüssigkeitstropfen (2) und dem Ferrofluid (3) nicht vermischt.

6. Flüssigkeitslinse nach Anspruch 5, wobei die Zwischenschicht-Flüssigkeit (7) aus einem Öl besteht.

7. Flüssigkeitslinse nach einem oder mehreren der vorstehenden Ansprüche, wobei das Magnetmittel (4) einen Permanentmagneten (4a) umfasst, der in der Flüssigkeitslinse fest angeordnet ist.

8. Flüssigkeitslinse nach einem oder mehreren der vorstehenden Ansprüche, wobei das Magnetmittel (4) einen Permanentmagneten (4a) umfasst, der in der Flüssigkeitslinse mechanisch verschiebbar und dabei steuerbar angeordnet ist.

9. Flüssigkeitslinse nach einem oder mehreren der vorstehenden Ansprüche, wobei das Magnetmittel (4) zumindest eine Magnetspule (4b, 4c, 4d) umfasst, mit der das Ferrofluid (3) auf dem Träger (1) stromgesteuert in mindestens eine Richtung magnetisch angezogen werden kann oder mit dem das Magnetfeld durch einen Permanentmagneten (4a) zumindest teilweise stromgesteuert kompensiert werden kann.

10. Flüssigkeitslinse nach einem oder mehreren der vorstehenden Ansprüche, wobei das Magnetmittel (4) zumindest eine Magnetspule (4b, 4c, 4d) umfasst, mit der das Ferrofluid (3) auf dem Träger (1) in einer Ebene, die im Wesentlichen orthogonal zur Lichteinfallsrichtung ist, stromgesteuert in der Form verändert werden kann, um dadurch einen Fokuspunkt des Lichts orthogonal zur Lichteinfallsrichtung zu verschieben.

11. Flüssigkeitslinse nach einem oder mehreren der vorstehenden Ansprüche, ferner umfassend eine Aktuator gesteuerte zusätzliche Linseneinheit (8), die optisch im Strahlengang des Lichts angeordnet ist, um mit der zusätzlichen Linseneinheit (8) schnellere Änderungen der Brennweite erzeugen zu können, als dies über die Temperatur des Flüssigkeitstropfens möglich ist.

12. Verfahren zur Erzeugung einer einstellbaren, variablen Brennweite für ein Licht durch eine Flüssigkeitslise, folgende Schritte umfassend:
a) Anordnen eines Flüssigkeitstropfens (2) auf einem Träger (1) der Flüssigkeitslise, so dass der Flüssigkeitstropfen (2) von dem Licht durchstrahlt wird;
b) Anordnen eines Ferrofluids (3) über dem Flüssigkeitstropfen (2) auf dem Träger (1), so dass sie den Flüssigkeitstropfen (2) zumindest an den Flächen umgibt und daran anliegt, die nicht direkt mit dem Träger (1) in Verbindung stehen;
c) Anordnen eines Magnetmittels (4) unter dem Träger (1), um das Ferrofluid (3), das auf dem Träger (1) angeordnet ist, gegen den Träger zu ziehen und in allen möglichen Raumlagen der Flüssigkeitslise in seiner Lage auf dem Träger (1) zu halten, wodurch der Flüssigkeitstropfen (2) ebenso in seiner Lage auf dem Träger (1) gehalten wird;
d) Anordnen eines Temperaturelements (5) in der Weise, um mit dem Flüssigkeitstropfen (2) in thermisch leitfähiger Verbindung zu stehen; und
e) Steuern einer bestimmten Temperatur des Flüssigkeitstropfens (2), um dadurch eine Oberflächenspannung und durch die Oberflächenspannung eine linsenartige Wölbung des Flüssigkeitstropfens (2) zu steuern, wodurch die Brennweite der Flüssigkeitslise mitbestimmt wird.

## Claims

1. Fluid lens for the controlled adjustment of a variable focal length for a light guided through the fluid lens, comprising:
a) a carrier (1) having a light transition area (1b) for the light;
b) a fluid drop (2) which is highly transparent to the light and arranged on the carrier (1) above the light transition area (1b) as part of a lens function;
c) a ferrofluid (3) which is arranged above the fluid drop (2) such that it surrounds and contacts the fluid drop (2) at least at those surfaces which are not in direct contact with the carrier (1);
d) a magnet means (4) arranged below the carrier (1) and around the light transition area (1b) in order to draw the ferrofluid (3) arranged on the carrier (1) towards the carrier (1) and keep it in its position on the carrier (1) in all possible spatial positions of the fluid lens, keeping the fluid drop (2) in its position on the carrier (1) as well; and
e) a temperature element (5) which is arranged so as to be in thermal connection with the fluid drop in order to bring the fluid drop to a predetermined temperature and accordingly alter the surface tension of the fluid drop by means of the predetermined temperature in order to adjust the focal length thereby.

2. Fluid lens according to Claim 1, wherein the temperature element (5) is configured to be able to both heat and cool the fluid drop (2) in a controlled manner; and/or
where the temperature element (5) is a Peltier element; and/or where the temperature element (5) comprises a temperature sensor and control electronics for generating the predetermined temperature in the fluid drop (2).

3. Fluid lens according to Claim 1 or 2, wherein the carrier (1) has the form of a plate, a trough, a tray and/or
where the carrier (1) has a lens-like concave or convex configuration in the light transition area (1b) so as to thereby achieve a predetermined refractive power; and/or
where the carrier (1) consists at least partially of a glass or a glass composite material.

4. Fluid lens according to one or more of the above Claims, wherein the fluid drop (2) consists either of water, an alcohol, glycerin or of a mixture with at least one portion thereof.

5. Fluid lens according to one or more of the above Claims, wherein the ferrofluid (3) is either directly adjacent to the fluid drop (2) or wherein the ferrofluid (3) is spaced from the fluid drop (2) only by a thin intermediate fluid layer (7), with the intermediate layer fluid (7) serving the purpose of chemical separation between the ferrofluid (3) and the fluid drop (2) and not mixing with the fluid drop (2) and the ferrofluid (3).

6. Fluid lens according to Claim 5, with the intermediate fluid layer (7) consisting of an oil.

7. Fluid lens according to one or more of the above Claims, the magnet means (4) comprising a permanent magnet (4a) which is integrally arranged in the fluid lens.

8. Fluid lens according to one or more of the above Claims, the magnet means (4) comprising a permanent magnet (4a) which is arranged in the fluid lens, mechanically displaceable and controllable.

9. Fluid lens according to one or more of the above Claims, the magnet means (4) comprising at least one magnet coil (4b, 4c, 4d) by means of which the ferrofluid (3) on the carrier (1) can be magnetically attracted in at least one direction, controlled by a current, or by means of which the magnetic field of a permanent magnet (4a) can be compensated at least partially controlled by current.

10. Fluid lens according to one or more of the above Claims, the magnet means (4) comprising at least one magnet coil (4b, 4c, 4d) by means of which the shape of the ferrofluid (3) on the carrier (1) can be altered, controlled by current, on a plane which is substantially orthogonal to the direction of light incidence, so as to shift a focus point of the light orthogonally to the direction of light incidence.

11. Fluid lens according to one or more of the above Claims, further comprising an actuator-controlled additional lens unit (8) optically arranged in the optical path of the light so as to be able to cause faster changes in focal length with the additional lens unit (8) than is possible by means of the temperature of the fluid drop.

12. Method for producing an adjustable, variable focal length for a light through a fluid lens, comprising the following steps:
a) arranging a fluid drop (2) on a carrier (1) of the fluid lens so that the fluid drop (2) is transilluminated by the light;
b) arranging a ferrofluid (3) above the fluid drop (2) on the carrier (1) such that it surrounds and contacts the fluid drop (2) at least at those surfaces which are not in direct contact with the carrier (1);
c) arranging a magnet means (4) below the carrier (1) in order to draw the ferrofluid (3) arranged on the carrier (1) towards the carrier and keep it in its position on the carrier (1) in all possible spatial positions of the fluid lens, causing the fluid drop (2) to be kept in its position on the carrier (1) as well;
d) arranging a temperature element (5) such as to be in a thermally conductible connection with the fluid drop (2); and
e) controlling a predetermined temperature of the fluid drop (2) so as to control a surface tension and, by means of the surface tension, a lens-like curvature of the fluid drop (2), contributing to definition of the focal length of the fluid lens.

## Revendications

1. Lentille liquide pour le réglage contrôlé d'une focale variable pour une lumière dirigée au travers de la lentille liquide, comprenant:
a) un support (1) qui présente une zone de passage de la lumière (1b) pour la lumière;
b) une goutte de liquide (2) qui est hautement transparente pour la lumière et qui est disposée en tant que fonction de lentille sur le support (1) au-dessus de la zone de passage de la lumière (1b);
c) un ferrofluide (3) qui est ainsi disposé au-dessus de la goutte de liquide (2) qu'il entoure la goutte de liquide (2) au moins sur les surfaces et repose dessus, qui ne reposent pas sur, et ne sont pas directement en liaison avec, le support (1);
d) un moyen magnétique (4) qui est disposé sous le support (1) et autour de la zone de passage de la lumière (1b) pour attirer le ferrofluide (3) qui est disposé sur le support (1), contre le support (1) et le maintenir dans toutes les positions spatiales possibles de la lentille liquide dans sa position sur le support (1), moyennant quoi la goutte de liquide (2) est également maintenue dans sa position sur le support (1); et
e) un élément de température (5) qui est ainsi disposé pour être en liaison thermique avec la goutte de liquide, pour amener la goutte de liquide à une température précise et, par la température déterminée, modifier la tension de surface de la goutte de liquide de façon à effectuer ainsi le réglage de la focale.

2. Lentille liquide selon la revendication 1, dans laquelle l'élément de température (5) est conçu à la fois pour réchauffer et pour refroidir la goutte de liquide (2) de façon contrôlée ; et/ou
dans laquelle l'élément de température (5) est un élément Peltier; et/ou
dans laquelle l'élément de température (5) comprend un capteur de température et une électronique de réglage pour produire la température précise dans la goutte de liquide (2).

3. Lentille liquide selon la revendication 1 ou 2, dans laquelle le support (1) présente la forme d'une plaque, d'une cuvette, d'une coque; et/ou
dans laquelle le support (1) est conçu concave ou convexe à la manière d'une lentille dans la zone de passage de la lumière (1b) pour produire une réfringence pré-réglée; et/ou
dans laquelle le support (1) est composé au moins partiellement d'un verre ou d'un matériau de verre composite.

4. Lentille liquide selon l'une ou plusieurs des revendications précédentes, dans laquelle la goutte de liquide (2) est composée soit d'eau, d'un alcool, de glycérine ou soit d'un mélange comprenant au moins une partie de ceux-ci.

5. Lentille liquide selon l'une ou plusieurs des revendications précédentes, dans laquelle le ferrofluide (3) est soit délimité directement sur la goutte de liquide (2); ou dans laquelle le ferrofluide (3) est écarté de la goutte de liquide (2) uniquement par un liquide de couche intermédiaire (7) fin, dans laquelle le liquide de couche intermédiaire (7) sert à la séparation chimique entre le ferrofluide (3) et la goutte de liquide (2) et ne se mélange pas avec la goutte de liquide (2) et le ferrofluide (3).

6. Lentille liquide selon la revendication 5, dans lequel le liquide de couche intermédiaire (7) est constitué d'une huile.

7. Lentille liquide selon l'une ou plusieurs des revendications précédentes, dans laquelle le moyen magnétique (4) comprend un aimant permanent (4a) qui est disposé fixement dans la lentille liquide.

8. Lentille liquide selon l'une ou plusieurs des revendications précédentes, dans laquelle le moyen magnétique (4) comprend un aimant permanent (4a) qui est disposé en pouvant être déplacé mécaniquement et commandé dans la lentille liquide.

9. Lentille liquide selon l'une ou plusieurs des revendications précédentes, dans laquelle le moyen magnétique (4) comprend au moins une bobine magnétique (4b, 4c, 4d) avec laquelle le ferrofluide (3) peut être attiré magnétiquement dans au moins une direction sur le support (1) en étant commandé par du courant ou bien avec laquelle le champ magnétique peut être compensé en étant commandé par du courant au moins partiellement par le biais d'un aimant permanent (4a).

10. Lentille liquide selon l'une ou plusieurs des revendications précédentes, dans laquelle le moyen magnétique (4) comprend au moins une bobine magnétique (4b, 4c, 4d) avec laquelle le ferrofluide (3) sur le support (1), peut avoir sa forme modifiée, en étant commandé par du courant, dans un plan qui est essentiellement orthogonal au sens d'incidence de la lumière, pour déplacer un point de focale de la lumière de façon orthogonale au sens d'incidence de la lumière.

11. Lentille liquide selon l'une ou plusieurs des revendications précédentes, comprenant en outre une unité de lentille (8) supplémentaire commandée par actionneur qui est disposée de façon optique dans le trajet de faisceau de la lumière afin de pouvoir produire des modifications plus rapides de la focale avec l'unité de lentille (8), que cela est possible par la température de la goutte de liquide.

12. Procédé de production d'une focale réglable variable pour une lumière par une lentille liquide, comprenant les étapes suivantes:
a) agencement d'une goutte de liquide (2) sur un support (1) de la lentille liquide de façon à ce que la goutte de liquide (2) soit traversée par la lumière;
b) agencement d'un ferrofluide (3) au-dessus de la goutte de liquide (2) sur le support (1), de façon à ce qu'il entoure la goutte de liquide (2) au moins sur les surfaces et repose dessus, qui ne sont pas directement en liaison avec le support (1) ;
c) agencement d'un moyen magnétique (4) sous le support (1) pour attirer le ferrofluide (3) qui est disposé sur le support (1), contre le support et le maintenir dans toutes les positions spatiales possibles de la lentille liquide dans sa position sur le support (1), moyennant quoi la goutte de liquide (2) est également maintenue dans sa position sur le support (1); et
d) agencement d'un élément de température (5) de façon à être en liaison thermique conductible avec la goutte de liquide (2) ; et
e) commande d'une température précise de la goutte de liquide (2) afin ainsi de commander une tension de surface, et par la tension de surface de commander un bombement à la manière d'une lentille de la goutte de liquide (2), moyennant quoi la focale de la lentille liquide est déterminée.
